# EUROPÄISCHE PATENTSCHRIFT

(11) **EP 3 887 100 B1**
(45) Veröffentlichungstag und Bekanntmachung des Hinweises auf die Patenterteilung: **11.10.2023**
(21) Anmeldenummer: 19805316.7
(22) Anmeldetag: 21.11.2019
(51) Int. Cl.: B25J 9/16

(54) **VERFAHREN ZUM TRANSFERIEREN EINES GIESSBAREN ODER SCHÜTTBAREN MEDIUMS**
METHOD FOR TRANSFERRING A POURABLE OR LOOSE MEDIUM
PROCÉDÉ DE TRANSFERT D'UN MILIEU COULABLE OU VERSABLE

(30) Priorität: 28.11.2018 EP 18208802
(43) Veröffentlichungstag der Anmeldung: 06.10.2021
(73) Patentinhaber: Bayer Aktiengesellschaft, 51373 Leverkusen (DE)
(72) Erfinder: MLECZKO, Leslaw, 41542 Dormagen (DE); SCHWEIGER, Armin, 51469 Bergisch Gladbach (DE); WEGENER, Kathrin, 41472 Neuss (DE); COULON, Carl-Helmut, 53115 Bonn (DE)
(74) Vertreter: BIP Patents
(86) Internationale Anmeldenummer: PCT/EP2019/082058
(87) Internationale Veröffentlichungsnummer: WO 2020/109126

(56) Entgegenhaltungen:
- EP-A2- 3 088 141
- WO-A1-95/01911
- US-A1- 2018 056 286
- Daniel Löffler: "Hefeweizen Einschenkroboter, beer pouring robot", youtube, 31. August 2012 (2012-08-31), Seite 1 pp., XP054976758, Gefunden im Internet: URL:https://www.youtube.com/watch?v=MltbAK FXRtk [gefunden am 2016-09-01]
- kingdraki: "Kuka Roboter schenkt ein Weizen (Weissbier) ein", , 6. Juni 2007 (2007-06-06), Seite 1 pp., XP054976755, Gefunden im Internet: URL:https://www.youtube.com/watch?v=o8VqCq pfWrk [gefunden am 2016-09-01]

## Beschreibung

Die Erfindung betrifft ein Verfahren zum Transferieren eines gießbaren oder schüttbaren Mediums aus einem ersten Gefäß in ein zweites Gefäß mittels eines Roboterarms.

Menschen sind sehr geschickt bei der Handhabung und Manipulation von gieß- oder schüttbaren Medien und nutzen die physikalischen Eigenschaften, wie beispielsweise die einfache Formänderung des Mediums, bei der Handhabung aus. So üben schon kleine Kinder beim Spielen mit Wasser oder im Sandkasten mit welcher Bewegung das Wasser oder der Sand aus einem Eimer in einen weiteren Eimer geschüttet werden kann.

Hingegen ist eine solche Bewegung für einen Roboterarm eine weit komplexere Aufgabe. Die Planung und Ausführung von Bewegungen zur Manipulation von Objekten ist deswegen ein zentrales Problem in der Robotik. So gehört beispielsweise die Planung eines kollisionsfreien Pfades zum Transferieren eines Objektes von einer Ausgangsposition zu einer Zielposition zu den Kernaufgaben bei automatisierten Montage- und Produktionsarbeiten. Allerdings beschränkt sich die Bewegungsplanung in der Regel auf die Handhabung von starren Objekten, da hierbei einfache mathematische Modelle verwendet werden können. Diese mathematischen Modelle versagen jedoch bei der Handhabung von verformbaren Objekten bzw. von gieß- oder schüttbaren Medien.

EP 3 088 141 A2 offenbart eine Lösung zum Transferieren eines gießbaren Mediums aus einem ersten Gefäß in ein zweites Gefäß mittels eines kraftgeregelten Roboterarms, wobei eine Bewegung des Roboterarmes durch wenigstens einen Bewegungsparameter gesteuert wird, wobei ein erstes Gefäß (Flasche) mittels des Roboterarms gegriffen wird, ein zweites Gefäß (Serviergefäß) in einer Position zum Befüllen positioniert wird, und das erste Gefäß positioniert und orientiert wird, so dass zumindest ein Teil des einzuschenkenden Mediums in das zweite Gefäß fließt. Der Roboterarm umfasst zumindest einen Sensor, welcher dazu eingerichtet ist, Kräfte in vertikaler Richtung zu ermitteln; das durch den Roboterarm gegriffene Gefäß kann mit Hilfe des Sensors gewogen werden und damit seine Istfüllmasse bestimmt werden. Das Abgießen wird entsprechend dieser geregelt, insbesondere wird das restliche Einschenken des ersten Gefäßes geprüft. Mit anderen Worten wird das erste Gefäß vollständig entleert. Der Roboterarms ist in der Lage, das gegriffene Gefäß zu übergeben. Auch die erfolgreiche Übergabe wird mit Hilfe des oben genannten Sensors geregelt.

Bei der Handhabung und dem Transferieren von gieß- oder schüttbaren Medien mit einem Roboterarm treten viele Probleme auf, zum Beispiel, dass ein Teil des Mediums durch schnell oder unstetig ausgeführte Bewegungen verschüttet wird. Des Weiteren stellt das Transferieren eines festgelegten Volumens oder einer festgelegten Masse des Mediums durch eine Kippbewegung für einen Roboterarm eine große Herausforderung dar, insbesondere wenn der Prozess nur geringe Abweichungen zwischen der festgelegten und der transferierten Menge toleriert.

Auf das präzise Gießen einer festzulegenden Masse eines Mediums geht EP 3 088 141 A2 nicht ein.

US 2018/056286 A1 offenbart ein Verfahren zur Abfüllung einer biologischen und/oder chemischen Flüssigkeit in Reagenzgläser mittels einer durch einen Roboter gehaltenen Pipette, wobei die Luftöffnung der Pipette geregelt wird.

Davon ausgehend ist es die Aufgabe der Erfindung, eine Lösung bereitzustellen, mit der ein Roboterarm eine festzulegende Masse eines gieß- oder schüttbaren Mediums sicher von einem Gefäß in ein anderes Gefäß überführen kann.

Diese Aufgabe wird durch den Gegenstand des Patentanspruchs 1 gelöst. Bevorzugte Weiterbildungen finden sich in den Unteransprüchen.

Erfindungsgemäß ist also ein Verfahren zum Transferieren eines gießbaren oder schüttbaren Mediums aus einem ersten Gefäß in ein zweites Gefäß mittels eines Roboterarms vorgesehen, wobei das zweite Gefäß auf einer Waage positioniert ist,
wobei eine Bewegung des Roboterarmes durch wenigstens einen Bewegungsparameter gesteuert wird, mit den folgenden Verfahrensschritten:
a) Positionieren des ersten Gefäßes am Roboterarm derart, dass durch die Bewegung des Roboterarmes ein Massestrom des Mediums aus dem ersten Gefäß veränderbar ist,
b) Positionieren des zweiten Gefäßes derart, dass aus dem ersten Gefäß ausgegossenes bzw. ausgeschüttetes Medium im Wesentlichen durch die Wirkung der Schwerkraft in das zweite Gefäß gelangt,
c) Festlegen der in das zweite Gefäß einzufüllenden Masse des Mediums als Sollfüllmasse,
d) Bestimmen der in das zweite Gefäß umgefüllten Masse des Mediums als Istfüllmasse, sowie der zeitlichen Veränderung der Istfüllmasse des Mediums als Istmassestrom,mittels der Waage,
e) Berechnen eines Stellmassestroms als Stellgröße eines ersten Regelkreises unter Berücksichtigung der Istfüllmasse und der Sollfüllmasse,
f) Verwenden der Stellgröße des ersten Regelkreises als Führungsgröße eines zweiten Regelkreises, dahingehend dass der berechnete Stellmassestrom als Sollmassestrom verwendet wird,
g) Berechnen des wenigstens einen Bewegungsparameters des Roboterarmes als Stellgröße des zweiten Regelkreises unter Berücksichtigung des Sollmassestroms und des Istmassestroms, und
h) Ausführen der Bewegung des Roboterarmes, auf Basis des wenigstens einen Bewegungsparameters.

Erfindungsgemäß ist außerdem eine Vorrichtung gemäß Anspruch 10 zur Durchführung des obigen Verfahrens vorgesehen, wobei die Vorrichtung einen Roboterarm und eine Waage umfasst, der Roboterarm dazu ausgeführt ist, ein am Roboterarm positioniertes Gefäß, das ein gießbares oder schüttbares Medium enthält, derart zu bewegen, dass ein Massestrom des Mediums aus dem Gefäß veränderbar ist und die Bewegung des Roboterarmes durch wenigstens einen Bewegungsparameter steuerbar ist.

Die Grundidee der Erfindung ist also, dass durch die Bewegung des Roboterarmes eine festzulegende Masse des Mediums vom ersten in das zweite Gefäß transferiert wird, wobei die transferierte Masse möglichst der Sollfüllmasse entspricht. Hierzu führt der Roboterarm eine Bewegung aus, durch die der Massestrom des Mediums aus dem ersten Gefäß veränderbar ist, wobei die Bewegung durch wenigstens einen Bewegungsparameter steuerbar ist. Ein wesentlicher Aspekt der Erfindung ist, dass zur Regelung des wenigstens einen Bewegungsparameters des Roboterarmes zwei Regelkreise verwendet werden. Hinsichtlich der Ausgestaltung dieser Regelkreise ist vorgesehen, dass der zweite Regelkreis als Stellgröße eine Größe verwendet, die den Massestrom aus dem ersten Gefäß verändert, nämlich den wenigstens einen Bewegungsparameter des Roboterarmes. Weiterhin ist vorgesehen, dass als Führungsgröße für den zweiten Regelkreis, die Stellgröße des ersten Regelkreises verwendet wird. Für den Sollwert des zweiten Regelkreises - den Sollmassestrom - wird also der Stellmassestrom verwendet. Vom Standpunkt des zweiten Regelkreises ist der erste Regelkreis also ein Sollwertgeber, dessen Sollwert sich nur langsam ändert. Der erste Regelkreis weist somit als Stellgröße - den Stellmassestrom - eine Größe auf, die die Füllmasse des zweiten Gefäßes ändert. Vom Standpunkt des ersten Regelkreises ist der zweite Regelkreis also ein schnelles Stellglied, dessen Verstellen die Füllmasse im zweiten Gefäß ändert. Durch die zwei Regelkreise lässt das Verfahren ein sehr genaues Transferieren des gießbaren oder schüttbaren Mediums aus dem ersten in das zweite Gefäß zu.

Hierbei hat das Verfahren den Vorteil, dass ein hoher Grad an Reproduzierbarkeit bei mehrfachem Transferieren der gleichen Sollfüllmasse erreicht wird - das Verfahren also eine hohe Präzision aufweist. Weiterhin weist das Verfahren durch die Regelkreise auch eine hohe Richtigkeit auf, d.h. dass ein hoher Grad an Übereinstimmung zwischen der transferierten Masse des Mediums und der Sollfüllmasse besteht. Durch die Automatisierung mittels des Roboterarmes ist das Verfahren des Weiteren zuverlässig und weitestgehend unabhängig von menschlichem Fehlverhalten. Somit bietet das Verfahren auch den Vorteil, dass gefährliche, giftige und/oder bei menschlicher Handhabung anderweitig gesundheitsgefährdende Medien transferiert werden können, ohne dabei die Gesundheit des Menschen zu riskieren.

Ein derart aufgebautes Verfahren eignet sich dann besonders für den Einsatz in einem stark regulierten Umfeld, wie beispielsweise in der pharmazeutischen Industrie oder der Lebensmittelherstellung, insbesondere im Bereich der Qualitätskontrolle und/oder der Analytik. In einem stark regulierten Umfeld sind beispielsweise Richtlinien zur Qualitätssicherung der Produktions- bzw. Arbeitsabläufe einzuhalten (GMP-Richtlinien), deren Erfüllung oft eine verbindliche Anforderung der Behörden ist.

Das gießbare oder schüttbare Medium kann zum Beispiel eine Flüssigkeit sein, wie Wasser, ein organisches Lösungsmittel, ein nichtnewtonsches Fluid, oder eine Mischung aus verschiedenen Flüssigkeiten. Nichtnewtonsche Fluide weisen ein Verformungsverhalten auf, das sich nicht mehr einfach durch Newtonsche Gesetze beschreiben lässt. Beispiele für nichtnewtonsche Fluide sind Blut, Zementleime, Treibsand und Ketchup. In der Flüssigkeit können andere Stoffe enthalten sein. Diese können flüssig oder fest, gelöst, ungelöst oder dispergiert sein. Die Flüssigkeit kann unterschiedliche Viskosität aufweisen, beispielsweise eine hohe Viskosität wie Honig oder Öl, oder eine geringe Viskosität wie Wasser. Des Weiteren kann das Medium auch ein schüttbarer Feststoff sein, wie ein grobkörniges oder feinkörniges Pulver. Weiterhin kann das Medium ein Granulat, Pellets oder Späne sein, wobei auch eine Mischung davon möglich ist. Das Medium kann unterschiedliche Temperaturen aufweisen, beispielsweise Raumtemperatur, 4 °C oder 45 °C, solange es bei der Temperatur noch gieß- oder schüttbar ist. Bevorzugt ist das Medium Wasser, eine Peptonphosphat-Pufferlösung, und/oder ein etwa 45 °C heißer Hefeextrakt-Agar.

Die Masse des Mediums wird über die Gewichtskraft mittels der Waage bestimmt. Die Sollfüllmasse ist die Masse des Mediums, die durch das Verfahren vom ersten in das zweite Gefäß transferiert werden soll. Der Massestrom des Mediums ist die zeitliche Änderung der Masse des Mediums im ersten oder im zweiten Gefäß. Über die Dichte des Mediums ist die Masse mit dem Volumen des Mediums verknüpft. Somit ist es auch möglich, bei bekannter Dichte des Mediums, den zu transferierenden Anteil des Mediums nicht als Masse und somit als Sollfüllmasse festzulegen, sondern ein zu transferierendes Volumen, also ein Sollvolumen, festzulegen. Die Masse des Mediums ist über die stoffmengenbezogene Masse bzw. molare Masse des Mediums mit der Stoffmenge verknüpft. Somit ist es auch möglich, bei bekannter molarer Masse des Mediums, den zu transferierenden Anteil des Mediums als Sollstoffmenge festzulegen.

Das erste und/oder das zweite Gefäß können grundsätzlich jede Art an Gefäß sein, das zur Aufnahme eines schütt- oder gießbaren Mediums geeignet ist. Die Geometrie des ersten und/oder zweiten Gefäßes kann grundsätzlich beliebig sein. Bevorzugt weist das erste und/oder zweite Gefäß einen wenigstens abschnittsweise planen Boden auf, mit dem das erste und/oder zweite Gefäß auf einer geraden Ebene, wie einem Tisch, sicher stehen kann. Das erste und/oder zweite Gefäß kann einen beliebigen Rauminhalt aufweisen, beispielsweise 250 ml, 500 ml oder 1 l. Bevorzugt ist das erste und/oder zweite Gefäß eine Flasche, wobei die Flasche verschließbar sein kann. Beispielsweise kann es sich um eine Glasflasche mit einem Schraubverschluss handeln. Weiter bevorzugt handelt es sich um eine Laborglasflasche, die ein genormtes Gewinde, beispielsweise ein GL45 Gewinde, aufweist. Des Weiteren kann das erste und/oder zweite Gefäß ein Messbecher, ein Erlenmeyerkolben und/oder eine Petrischale sein.

Unter einem Roboterarm ist im Rahmen der Erfindung eine Vorrichtung zu verstehen, die dazu ausgelegt ist, mit der Umgebung physikalisch zu interagieren, um mechanische Arbeit durchzuführen. Der Roboterarm kann mehrere durch Gelenke verbundene Glieder aufweisen, wobei die Gelenke durch Antriebe verstellt werden können. Der Roboterarm kann zum Beispiel ein Greifsystem umfassen, wodurch das erste Gefäß am Roboterarm positioniert werden kann. Grundsätzlich ist es möglich, dass der Roboterarm manuell gesteuert wird. Allerdings ist bevorzugt vorgesehen, dass die Bewegung des Roboterarms durch Eingabe und/oder Programmierung gesteuert wird. Hierfür lässt sich die Bewegung des Roboterarmes durch wenigstens einen Bewegungsparameter steuern. Beispielsweise kann ein Bewegungsparameter eine Geschwindigkeit sein, mit der der Roboterarm eines seiner Gelenke verstellt.

Das Verfahren zum Transferieren sieht mehrere Verfahrensschritte vor, wobei vor dem Transferieren des Mediums die Gefäße entsprechend positioniert werden und die zu transferierende Masse festgelegt wird. Hierbei wird das erste Gefäß am Roboterarm derart positioniert, dass durch die Bewegung des Roboterarmes der Massestrom des Mediums aus dem ersten Gefäß veränderbar ist. Das Positionieren der Gefäße kann ein Greifen der Gefäße mittels eines Greifsystems am Roboterarm umfassen. Beispielsweise kann ein Greifer eine verschließbare Flasche mit Gewinde am Hals und/oder Gewinde greifen. Dies hat den Vorteil, dass das Positionieren besonders einfach ist, da das Gewinde eine normierte Abmessung aufweist. Der Massestrom des Mediums ist die zeitliche Änderung der Masse des Mediums. Beispielsweise kann eine Kipp- oder Drehbewegung dazu führen, dass das Medium im ersten Gefäß aus dem Gefäß ausfließt. Der Massestrom, der dabei aus dem ersten Gefäß austritt, kann beispielsweise über die Größe des Kippwinkels verändert werden. Des Weiteren wird das zweite Gefäß derart positioniert, dass aus dem ersten Gefäß ausgegossenes bzw. ausgeschüttetes Medium im Wesentlichen durch die Wirkung der Schwerkraft in das zweite Gefäß gelangt. Dass das Medium im Wesentlichen durch die Wirkung der Schwerkraft in das zweite Gefäß gelangt, bedeutet vorliegend, dass das Medium nicht gegen die Schwerkraft transportiert wird, wobei das Medium allerdings nicht direkt in das zweite Gefäß gelangen muss, sondern auf seinem Weg dorthin umgelenkt werden kann, z.B. mittels eines Schlauchs oder eines Kanals, durch den das Medium hindurch transferiert wird. Bevorzugt wird das zweite Gefäß unter dem ersten Gefäß positioniert, so dass das aus dem ersten Gefäß austretende Medium vom zweiten Gefäß ohne Weiteres aufgefangen werden kann. Das Festlegen einer Sollfüllmasse des zweiten Gefäßes kann beispielsweise über eine Eingabe oder Programmierung der Sollfüllmasse erfolgen. Alternativ ist vorstellbar, dass die Sollfüllmasse in Abhängigkeit des zweiten Gefäßes und/oder des gieß- bzw. schüttbaren Mediums automatisiert durch das Verfahren festgelegt wird.

Nachdem die Gefäße entsprechend positioniert sind und die zu transferierende Masse festgelegt ist, werden mittels einer Waage die Istfüllmasse sowie die zeitliche Veränderung der Istfüllmasse, sprich der Istmassestrom, bestimmt. Die Istfüllmasse und der Istmassestrom können unterschiedliche, sich über die Zeit des Transferierens des Mediums verändernde Werte annehmen. Des Weiteren können die Werte zu Beginn des Transferierens des Mediums auch Null sein. Im weiteren Verfahrensverlauf wird unter anderem auf Basis dieser beiden Istwerte durch die beiden Regelkreise der wenigstens eine Bewegungsparameter geregelt und die Bewegung des Roboterarmes entsprechend ausgeführt. Durch die Bewegung des Roboterarmes wird eine Masse des Mediums in das zweite Gefäß transferiert, wobei die transferierte Masse möglichst der Sollfüllmasse entspricht.

Hinsichtlich der Bewegung des Roboterarmes ist gemäß einer bevorzugten Weiterbildung der Erfindung vorgesehen, dass die Bewegung des Roboterarmes eine Drehbewegung um eine Drehachse umfasst, wobei die Drehachse im Wesentlichen senkrecht zur Wirkung der Schwerkraft liegt. Das erste Gefäß ist bevorzugt derart am Roboterarm positioniert, dass durch eine Drehbewegung des Roboterarmes das erste Gefäß eine Kipp- bzw. Drehbewegung ausführt, die dazu führt, dass der Massestrom aus dem ersten Gefäß verändert wird. Die Drehachse der Drehbewegung des Roboterarmes liegt also im Wesentlichen senkrecht zur Wirkung der Schwerkraft, oder mit anderen Worten: die Drehachse des Roboterarmes liegt im Wesentlichen horizontal. Die Drehbewegung ist eine Bewegung, die sich auf einfache Weise durch den wenigstens einen Bewegungsparameter steuern lässt. Somit führt dies zu einem besonders einfach umzusetzenden Verfahren.

In diesem Zusammenhang ist gemäß einer bevorzugten Weiterbildung der Erfindung vorgesehen, dass der wenigstens eine Bewegungsparameter der Bewegung des Roboterarmes einen Drehwinkel, eine Zeitdauer eines konstanten Drehwinkels und/oder eine Winkelgeschwindigkeit des Drehwinkels des Roboterarmes umfasst. Diese Parameter charakterisieren eine Drehbewegung um eine Achse vollständig. Für das Transferieren des Mediums vom ersten in das zweite Gefäß ist also keine Berechnung einer eine Translation beinhaltenden und möglicherweise komplexen Bewegungsbahn des Roboterarmes erforderlich. Stattdessen werden durch das Verfahren bevorzugt die genannten Bewegungsparameter geregelt, die eine Drehbewegung beschreiben. Besonders bevorzugt ist vorgesehen, dass die Stellgröße des zweiten Regelkreises die Winkelgeschwindigkeit des Drehwinkels des Roboterarmes ist. Hierdurch lässt sich durch nur eine Stellgröße eine vollständige Umsetzung der Drehbewegung erreichen, wobei das Verfahren durch die Regelung die Winkelgeschwindigkeit jeweils derart anpasst, dass die gewünschte Sollfüllmenge in das zweite Gefäß transferiert wird.

Grundsätzlich kann es sich bei den Reglern in den zwei Regelkreisen um PID-Regler (proportional-integral-derivative controller) handeln, die aus den Anteilen des P-Gliedes, des I-Gliedes und des D-Gliedes bestehen. Gemäß einer bevorzugten Weiterbildung der Erfindung ist allerdings vorgesehen, dass der erste und/oder der zweite Regelkreis einen P-Regler umfasst. Ein P-Regler ist ein stetig linearer Regler, der ausschließlich aus einem proportionalen Anteil der Verstärkung bzw. Abschwächung besteht. Das Ausgangssignal des P-Reglers ist proportional zum Eingangssignal. Somit ist bevorzugt die Stellgröße des ersten Regelkreises - der Stellmassestrom - proportional zur Abweichung der Istfüllmasse von der Sollfüllmasse und/oder die Stellgröße des zweiten Regelkreises - der wenigstens eine Bewegungsparameter - proportional zur Abweichung des Istmassestroms vom Sollmassestrom. Besonders bevorzugt umfassen beide Regelkreise einen P-Regler.

Hinsichtlich der Ausgestaltung der Regelkreise ist gemäß einer bevorzugten Weiterbildung der Erfindung vorgesehen, dass der erste und der zweite Regelkreis zusammen eine Kaskadenregelung bilden. Das Prinzip der Kaskadenregelung besteht in der hierarchischen Ineinanderschachtelung von Regelkreisen. Der erste Regelkreis ist bevorzugt der äußere Regelkreis und der zweite Regelkreis ist bevorzugt der innere Regelkreis. Der Sollwert bzw. die Führungsgröße des inneren Regelkreises besteht aus der Stellgröße des äußeren Regelkreises. Die Gesamtregelstrecke wird dadurch in kleinere, besser regelbare Teilstrecken untergliedert, womit sich gegenüber einem direkt wirkenden Regler die Regelgenauigkeit erhöht. Durch die Kaskadenregelung lässt das Verfahren ein genaues Transferieren des gießbaren oder schüttbaren Mediums aus dem ersten in das zweite Gefäß zu.

Erfahrungsgemäß ist vorgesehen, dass das zweite Gefäß auf einer Waage positioniert wird. Das zweite Gefäß wird also nicht nur derart positioniert, dass aus dem ersten Gefäß ausgegossenes bzw. ausgeschüttetes Medium im Wesentlichen durch die Wirkung der Schwerkraft in das zweite Gefäß gelangt, sondern steht auf einer Waage. Hierdurch wird das Bestimmen der Istfüllmasse sowie das Bestimmen der zeitlichen Veränderung der Istfüllmasse also das Bestimmen des Istmassestroms in Schritt d) besonders einfach, da das Gefäß nicht nochmals verschoben bzw. umpositioniert werden muss.

In diesem Zusammenhang ist gemäß einer weiteren bevorzugten Weiterbildung der Erfindung vorgesehen, dass in Schritt b) des Verfahrens das zweite Gefäß derart positioniert wird, dass das aus dem ersten Gefäß ausgegossene bzw. ausgeschüttete Medium vollständig in das zweite Gefäß gelangt. Die Regelung des wenigstens einen Bewegungsparameters ist besonders genau, wenn das Medium, das das erste Gefäß verlässt, vollständig vom zweiten Gefäß aufgefangen wird. Somit ist der Massestrom, der das erste Gefäß verlässt, im Betrag gleich groß, wie der Massestrom in das zweite Gefäß hinein.

Grundsätzlich ist es möglich, dass die Schritte d) bis h) des Verfahrens, also das Bestimmen der Istfüllmasse und des Istmassestroms, das Berechnen des Stellmassestroms, das Verwenden des Stellmassestroms als Sollmassestrom, das Berechnen des wenigstens einen Bewegungsparameters, sowie das Ausführen der Bewegung, nur zu wenigen diskreten Zeitpunkten während des Transferierens durchgeführt wird. Allerdings ist in einer bevorzugten Weiterbildung der Erfindung vorgesehen, dass die Schritte d) bis h) des Verfahrens kontinuierlich während des Transferierens des gießbaren oder schüttbaren Mediums durchgeführt werden. Somit handelt es sich um ein Verfahren, das eine nahezu instantane Rückkopplung der Istfüllmasse und des Istmassestroms vorsieht. Hierdurch lässt sich eine besonders hohe Genauigkeit des Transferierens erzielen, da das Transferieren des gießbaren oder schüttbaren Mediums kontrolliert durchgeführt wird. Das zweite Gefäß steht also während des Transferierens auf der Waage, wobei die Messergebnisse der Waage kontinuierlich an die Regelkreise zurückgegeben werden.

Um das Verfahren möglichst verlässlich zu gestalten, ist gemäß einer bevorzugten Weiterbildung der Erfindung vorgesehen, dass das Verfahren zusätzlich den Schritt des Bestimmens der Leermasse des zweiten Gefäßes umfasst. Dies kann beispielsweise mittels der Waage durchgeführt werden. Die Leermasse des zweiten Gefäßes ist die Masse des zweiten Gefäßes bevor das Medium vom ersten in das zweite Gefäß transferiert wurde. Das zweite Gefäß kann beim Bestimmen der Leermasse ungefüllt bzw. leer sein, oder aber mit etwas gefüllt oder teilgefüllt sein. Hierbei ist es möglich, dass das zweite Gefäß mit einem anderen Medium oder mit dem gleichen Medium wie das zu transferierende Medium gefüllt ist. Das Bestimmen der Leermasse des zweiten Gefäßes hat den Vorteil, dass auf einfache Weise erkannt werden kann, ob die festgelegte Sollfüllmasse durch das zweite Gefäß aufgenommen werden kann. Somit wird sichergestellt, dass kein Übergießen bzw. Überschütten des zweiten Gefäßes stattfindet.

In Zusammenhang mit einem möglichst verlässlichen Verfahren ist gemäß einer bevorzugten Weiterbildung der Erfindung vorgesehen, dass das Verfahren zusätzlich einen oder mehrere der folgenden Schritte umfasst,
- Bestimmen der Masse des ersten Gefäßes,
- Bestimmen der Geometrie des ersten Gefäßes,
- Bestimmen der Art des Mediums und/oder
- Bestimmen der Viskosität des Mediums
und der erste und/oder zweite Regelkreis und/oder der wenigstens eine Bewegungsparameter unter Berücksichtigung eines oder mehrerer dieser Werte anpassbar ist. Beispielsweise kann über das Bestimmen der Masse des ersten Gefäßes, zum Beispiel mittels der Waage, festgestellt werden, wie viel Medium im ersten Gefäß ist. Somit kann sichergestellt werden, dass die festgelegte Sollfüllmasse, die in das zweite Gefäß transferiert werden soll, nicht höher ist als die vorhandene Masse im ersten Gefäß. Weiterhin kann durch Bestimmen der Geometrie in Kombination mit der Masse des ersten Gefäßes die Füllstandshöhe des Mediums im ersten Gefäß ermittelt werden.

Zum Bestimmen der Geometrie kann beispielsweise eine Kamera eingesetzt werden. Alternativ kann das Gefäß mit einer maschinenlesbaren Kennzeichnung versehen sein, beispielsweise einem Strichcode oder mit einem RFID-Chip. Hierüber kann das Gefäß identifiziert und somit die Geometrie des Gefäßes bestimmt werden. Die Information zur Geometrie des Gefäßes kann in die Regelung des wenigstens einen Bewegungsparameters mit einfließen. Beispielsweise kann die Bewegung zu Beginn beschleunigt erfolgen, wenn die Füllstandshöhe gering ist und ein großer Drehwinkel erreicht werden muss, bis es zu einem Massefluss aus dem ersten Gefäß kommt. Weiterhin kann vorgesehen sein, dass die Art des Mediums und/oder die Viskosität des Mediums berücksichtigt werden. Beispielsweise kann es bei einem Medium mit hoher Viskosität zu einer zeitlichen Verzögerung zwischen dem Verlassen des Mediums aus dem ersten Gefäß und dem Eintreffen im zweiten Gefäß kommen. Dieses Fließverhalten kann in den Regelkreisen und/oder beim wenigstens einen Bewegungsparameter berücksichtigt werden, so dass es nicht zu einem Überschwingen der Regelung kommt. Das Bestimmen der Art und/oder Viskosität des Mediums kann zum Beispiel über die maschinenlesbare Kennzeichnung des ersten Gefäßes erfolgen.

Gemäß einer bevorzugten Weiterbildung der Erfindung ist vorgesehen, dass die Vorrichtung zur Durchführung des Verfahrens zwei eine Kaskadenregelung bildende Regelkreise umfasst, die dazu ausgeführt sind, den wenigstens einen Bewegungsparameter zu regeln. Die Kaskadenregelung ermöglicht die Gesamtregelstrecke in kleinere, besser regelbare Teilstrecken zu untergliedern, womit sich gegenüber einem direkt wirkenden Regler die Regelgenauigkeit erhöht. Die Kaskadenregelung führt also zu einem genauen Transferieren des gießbaren oder schüttbaren Mediums aus dem ersten in das zweite Gefäß.

Hinsichtlich der Ausgestaltung der Vorrichtung zur Durchführung des Verfahrens ist des Weiteren bevorzugt vorgesehen, dass der Roboterarm einen Greifer umfasst, der dazu ausgestaltet ist, das erste und/oder das zweite Gefäß zu umgreifen. Bevorzugt handelt es sich um einen Zweifinger-Greifer, insbesondere um einen adaptiven Zweifinger-Greifer, da dieser durch seine Adaptivität eckige Gefäße parallel und runde Gefäße umschließend greifen kann. Des Weiteren ist vorgesehen, dass der Greifer ausreichend Greifkraft aufweist, um das erste Gefäß und das zweite Gefäß auch in befülltem Zustand sicher zu greifen.

Nachfolgend wird die Erfindung anhand eines bevorzugten Ausführungsbeispiels unter Bezugnahme auf die Zeichnungen näher erläutert.

In den Zeichnungen zeigen
- Fig. 1: ein Flussdiagramm mit den Schritten des Verfahrens zum Transferieren eines gießbaren oder schüttbaren Mediums aus einem ersten Gefäß in ein zweites Gefäß gemäß einem bevorzugten Ausführungsbeispiel der Erfindung,
- Fig. 2 a, b und c: schematische Darstellungen der Vorrichtung zur Ausführung des Verfahrens gemäß einem bevorzugten Ausführungsbeispiel der Erfindung und
- Fig. 3: eine schematische Darstellung zweier Regelkreise, die zur Regelung des wenigstens einen Bewegungsparameters verwendet werden, gemäß einem bevorzugten Ausführungsbeispiel der Erfindung.

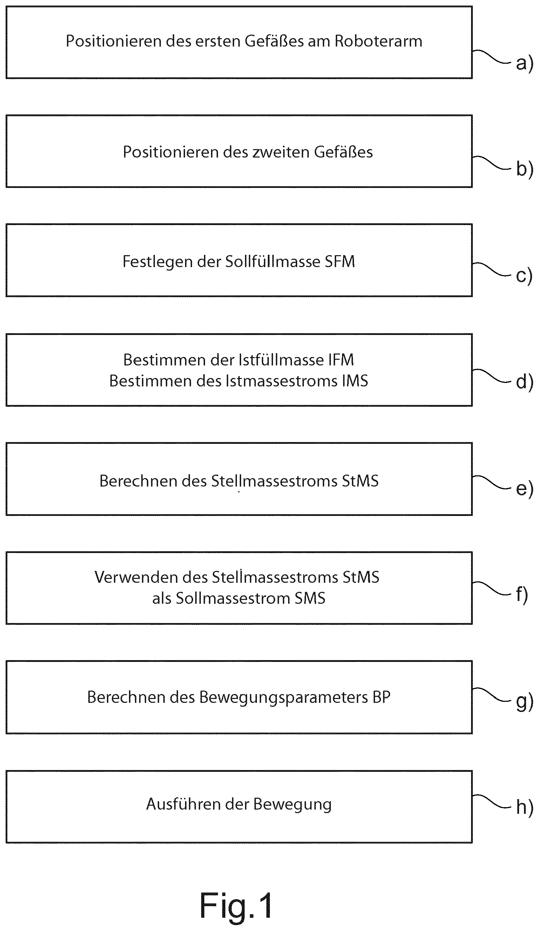

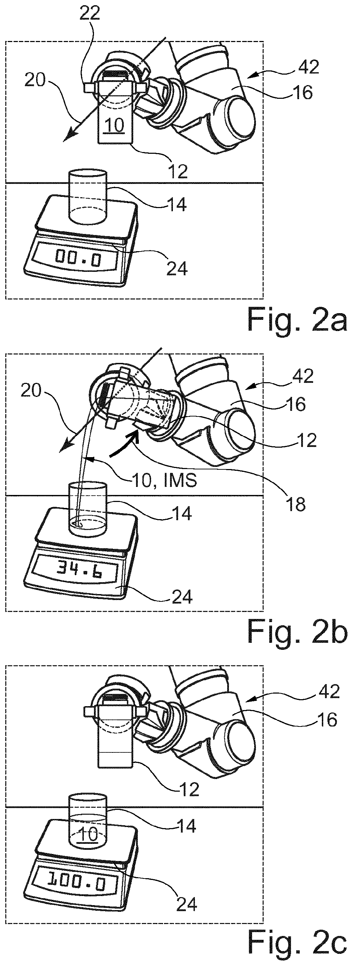

Figur 1 zeigt ein Flussdiagramm mit den Schritten des Verfahrens zum Transferieren eines gießbaren oder schüttbaren Mediums 10 aus einem ersten Gefäß 12 in ein zweites Gefäß 14 mittels eines Roboterarmes 16 gemäß einem bevorzugten Ausführungsbeispiel der Erfindung. Das Verfahren wird durch eine Vorrichtung 42 mit einem Roboterarm 16 ausgeführt, wobei die Figuren 2 a, b und c schematisch diese Vorrichtung 42 beim Ausführen ausgewählter Schritte des Verfahrens zeigt.

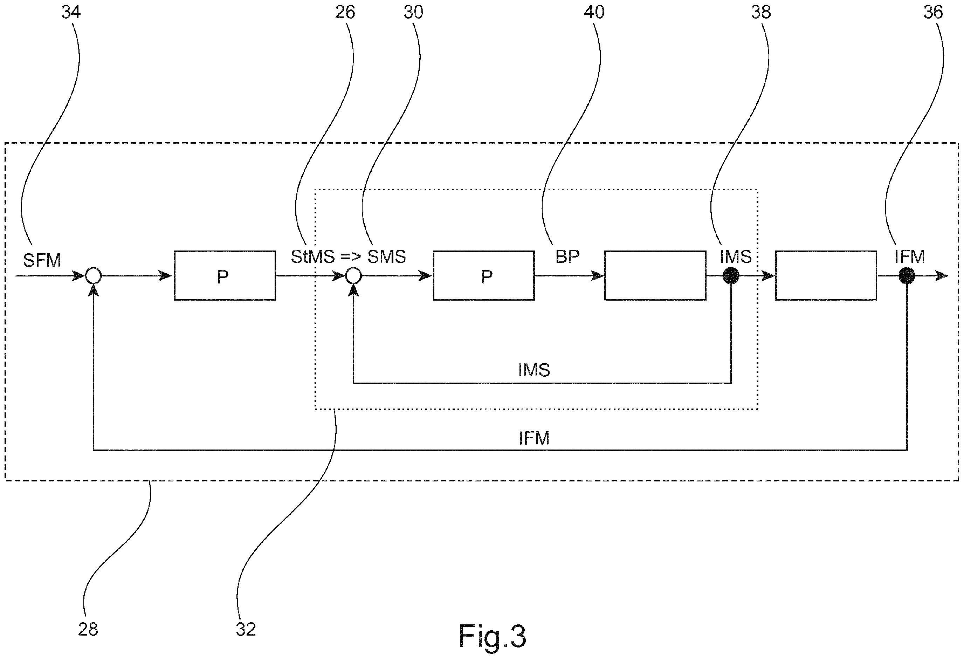

Im Folgenden werden die Schritte des Verfahrens unter Bezugnahme auf das Flussidagramm in Figur 1, die Vorrichtung 42 in Figur 2, sowie die Regelung in Figur 3 erläutert.

Das Verfahren umfasst den Schritt a) Positionieren des ersten Gefäßes 12 am Roboterarm 16 derart, dass durch die Bewegung 18 des Roboterarmes 16 ein Massestrom des Mediums 10 aus dem ersten Gefäß 10 verändert wird. Wie in Figur 2 dargestellt, weist der Roboterarm 16 einen Greifer 22 auf, um das erste Gefäß 12 zu positionieren. Bei der Bewegung 18, die den Massestrom verändert, handelt es sich um eine Drehbewegung 18 des Roboterarmes 16 um eine Drehachse 20, die senkrecht zur Wirkung der Schwerkraft steht.

In einem weiteren Schritt b) des Verfahrens wird das zweite Gefäß 14 derart positioniert, dass aus dem ersten Gefäß 12 ausgegossenes bzw. ausgeschüttetes Medium 10 im Wesentlichen durch die Wirkung der Schwerkraft in das zweite Gefäß 14 gelangt. Gemäß dem hier beschriebenen bevorzugten Ausführungsbeispiel der Erfindung wird das zweite Gefäß 14 auf einer Waage 24 positioniert, wie in den Figuren 2 a, b und c dargestellt.

Nachdem in einem weiteren Schritt c) des Verfahrens die in das zweite Gefäß 14 einzufüllende Masse des Mediums 10 als Sollfüllmasse SFM, festgelegt wird, sind die Schritte a) bis c) des Verfahrens, welche Vorbereitungshandlungen sind, durchgeführt. Die Sollfüllmasse SFM beträgt in diesem Beispiel 100 g. Figur 2a zeigt die Vorrichtung 42 im Zustand nachdem die Schritte a) bis c) durchgeführt wurden. Gemäß dem hier beschriebenen bevorzugten Ausführungsbeispiel der Erfindung ist das Medium 10 eine Flüssigkeit, nämlich Wasser.

Die folgenden Verfahrensschritte werden während des Transferierens des gießbaren oder schüttbaren Mediums 10 kontinuierlich durchgeführt. In Schritt d) wird mittels der Waage 24, die in das zweite Gefäß 14 umgefüllte Masse des Mediums 10 als Istfüllmasse IFM sowie die zeitliche Veränderung der Istfüllmasse des Mediums 10 als Istmassestrom IMS bestimmt. Das Verfahren berechnet dann in Schritt e) einen Stellmassestrom StMS als Stellgröße 26 eines ersten Regelkreises 28 unter Berücksichtigung der Istfüllmasse IFM und der Sollfüllmasse SFM. Diese Stellgröße 26 des ersten Regelkreises 28 wird in Schritt f) als Führungsgröße 30 eines zweiten Regelkreises 32 verwendet, dahingehend dass der berechnete Stellmassestrom StMS als Sollmassestrom SMS verwendet wird.

Die zwei Regelkreise 28, 32 sind in Figur 3 schematisch dargestellt. Es handelt sich um eine Kaskadenregelung, wobei der erste Regelkreis 28 den äußeren Regelkreis bildet, der als Führungsgröße 34 die Sollfüllmasse SFM aufweist und als Regelgröße 36 die Istfüllmasse IFM. Der zweite Regelkreis 32 bildet den inneren Regelkreis der Kaskadenregelung, der als Führungsgröße 30 den Sollmassestrom SMS und als Regelgröße 38 den Istmassestrom IMS aufweist.

In einem weiteren Verfahrensschritt g) wird der wenigstens eine Bewegungsparameter BP des Roboterarmes 16 als Stellgröße 40 des zweiten Regelkreises 32 unter Berücksichtigung des Sollmassestroms SMS und des Istmassestroms IMS berechnet. Beide Regelkreise 28, 32 weisen einen P-Regler auf, d.h. dass der Stellmassestrom StMS proportional zur Abweichung der Istfüllmasse IFM von der Sollfüllmasse SFM ist und dass der wenigstens eine Bewegungsparameter BP proportional zur Abweichung des Istmassestroms IMS vom Sollmassestrom SMS ist.

Der Roboterarm 16 führt in einem weiteren Schritt h) auf Basis des wenigstens einen Bewegungsparameters BP, die Bewegung 18 aus. Gemäß dem hier beschriebenen bevorzugten Ausführungsbeispiel ist der wenigstens eine Bewegungsparameter BP die Winkelgeschwindigkeit der Drehbewegung 18 des Roboterarmes 16. Figur 2b) zeigt die Vorrichtung 42 während des Transferierens des Mediums 10, wobei durch die Regelung der beiden Regelkreise 28, 32 die Winkelgeschwindigkeit der Drehbewegung 18 geregelt wird. Die Regelung führt dazu, dass die Bewegung 18 im Wesentlichen einer Kippbewegung, die hin und zurück ausgeführt wird, entspricht. Figur 2c) zeigt den Zustand der Vorrichtung 42 gegen Ende des Verfahrens, wenn die gewünschte Sollfüllmenge SFM des Mediums 10, hier 100 g, in das zweite Gefäß 14 transferiert wurde.

### Bezugszeichenliste

- 10: Medium
- 12: erstes Gefäß
- 14: zweites Gefäß
- 16: Roboterarm
- 18: Bewegung, Drehbewegung
- 20: Drehachse
- 22: Greifer
- 24: Waage
- 26: Stellgröße des ersten Regelkreises
- 28: erster Regelkreis
- 30: Führungsgröße des zweiten Regelkreises
- 32: zweiter Regelkreis
- 34: Führungsgröße des ersten Regelkreises
- 36: Regelgröße des ersten Regelkreises
- 38: Regelgröße des zweiten Regelkreises
- 40: Stellgröße des zweiten Regelkreises
- 42: Vorrichtung

- SFM: Sollfüllmenge (Führungsgröße des ersten Regelkreises)
- IFM: Istfüllmenge (Regelgröße des ersten Regelkreises)
- StMS: Stellmassestrom (Stellgröße des ersten Regelkreises)
- SMS: Sollmassestrom (Führungsgröße des zweiten Regelkreises)
- IMS: Istmassestrom (Regelgröße des zweiten Regelkreises)
- BP: Bewegungsparameter (Stellgröße des zweiten Regelkreises)

## Patentansprüche

1. Verfahren zum Transferieren einer einzufüllenden Masse eines gießbaren oder schüttbaren Mediums (10) aus einem ersten Gefäß (12) in ein zweites Gefäß (14), mittels eines Roboterarms (16),
wobei das zweite Gefäß (14) auf einer Waage (24) positioniert wird,
wobei eine Bewegung (18) des Roboterarmes (16)
durch wenigstens einen Bewegungsparameter (BP) gesteuert wird,
mit den folgenden Verfahrensschritten:
a) Positionieren des ersten Gefäßes (12) am Roboterarm (16) derart, dass durch eine Drehbewegung (18) des Roboterarmes (16) um eine Drehachse (20) ein Massestrom des Mediums (10) aus dem ersten Gefäß (12) veränderbar ist,
b) Positionieren des zweiten Gefäßes (14) derart, dass aus dem ersten Gefäß (12) ausgegossenes bzw. ausgeschüttetes Medium (10) im Wesentlichen durch die Wirkung der Schwerkraft in das zweite Gefäß (14) gelangt,
c) Festlegen der in das zweite Gefäß (14) einzufüllenden Masse des Mediums (10) als Sollfüllmasse (SFM),
d) Bestimmen der in das zweite Gefäß (14) umgefüllten Masse des Mediums (10) als Istfüllmasse (IFM), sowie der zeitlichen Veränderung der Istfüllmasse (IFM) des Mediums (10) in das zweite Gefäß (14) als Istmassestrom (IMS), mittels der Waage (24),
e) Berechnen eines Stellmassestroms (StMS) als Stellgröße (26) eines ersten Regelkreises (28) unter Berücksichtigung der Istfüllmasse (IFM) und der Sollfüllmasse (SFM),
f) Verwenden der Stellgröße (26) des ersten Regelkreises (28) als Führungsgröße (30) eines zweiten Regelkreises (32), dahingehend dass der berechnete Stellmassestrom (StMS) als Sollmassestrom (SMS) verwendet wird,
g) Berechnen des wenigstens einen Bewegungsparameters (BP) des Roboterarmes (16) als Stellgröße (40) des zweiten Regelkreises (32) unter Berücksichtigung des Sollmassestroms (SMS) und des Istmassestroms (IMS), wobei der wenigstens eine Bewegungsparameter die Drehbewegung um eine Achse charakterisiert und
h) Ausführen der Bewegung (18) des Roboterarmes (16), auf Basis des wenigstens einen Bewegungsparameters (BP).

2. Verfahren nach Anspruch 1, **dadurch gekennzeichnet, dass** die Drehachse (20) im Wesentlichen senkrecht zur Wirkung der Schwerkraft liegt.

3. Verfahren nach einem der vorherigen Ansprüche **dadurch gekennzeichnet, dass** der wenigstens eine Bewegungsparameter (PB) der Bewegung (18) des Roboterarmes (16) einen Drehwinkel, eine Zeitdauer eines konstanten Drehwinkels und/oder eine Winkelgeschwindigkeit des Drehwinkels des Roboterarmes (16) umfasst.

4. Verfahren nach einem der vorherigen Ansprüche **dadurch gekennzeichnet, dass** der erste und/oder der zweite Regelkreis (28, 32) einen P-Regler umfasst.

5. Verfahren nach einem der vorherigen Ansprüche **dadurch gekennzeichnet, dass** der erste und der zweite Regelkreis (28, 32) zusammen eine Kaskadenregelung bilden.

6. Verfahren nach einem der vorherigen Ansprüche **dadurch gekennzeichnet, dass** in Schritt b) des Verfahrens das zweite Gefäß (14) positioniert ist, so dass das aus dem ersten Gefäß (12) ausgegossene bzw. ausgeschüttete Medium (10) vollständig in das zweite Gefäß (14) gelangt.

7. Verfahren nach einem der vorherigen Ansprüche **dadurch gekennzeichnet, dass** die Schritte d) bis h) des Verfahrens kontinuierlich während des Transferierens des gießbaren oder schüttbaren Mediums (10) durchgeführt werden.

8. Verfahren nach einem der vorherigen Ansprüche **dadurch gekennzeichnet, dass** das Verfahren zusätzlich den Schritt Bestimmen einer Leermasse des zweiten Gefäßes (14) umfasst.

9. Verfahren nach einem der vorherigen Ansprüche **dadurch gekennzeichnet, dass** das Verfahren zusätzlich einen oder mehrere der folgenden Schritte umfasst,
- Bestimmen der Masse des ersten Gefäßes (12),
- Bestimmen der Geometrie des ersten Gefäßes (12),
- Bestimmen der Art des Mediums (10) und/oder
- Bestimmen der Viskosität des Mediums (10)
und der erste und/oder zweite Regelkreis (28, 32) und/oder der wenigstens eine Bewegungsparameter (BP) unter Berücksichtigung eines oder mehrerer dieser Werte angepasst wird.

10. Vorrichtung (42) die zur Durchführung des Verfahrens nach einem der Ansprüche 1 bis 9 eingerichtet ist, wobei die Vorrichtung einen Roboterarm (16) zum Greifen eines ersten Gefäßes (12) und eine Waage (24) zur Messung eines Massestroms eines Mediums (10) in ein zweites Gefäß (14) umfasst, der Roboterarm (16) dazu ausgeführt ist ein am Roboterarm (16) positioniertes Gefäß (12), das ein gießbares oder schüttbares Medium (10) enthält, derart durch eine Drehbewegung (18) des Roboterarmes (16) um eine Drehachse (20) zu bewegen, dass ein Massestrom des Mediums (10) aus dem Gefäß (12) veränderbar ist und die Bewegung (18) des Roboterarmes (16) durch wenigstens einen Bewegungsparameter (BP) mit Hilfe der Messung durch die Waage (24) steuerbar ist, wobei die Vorrichtung zwei eine Kaskadenregelung bildende Regelkreise (28, 32) umfasst, die dazu ausgeführt sind, den wenigstens einen Bewegungsparameter (BP) zu regeln.

## Claims

1. Method for transferring a mass of a pourable medium (10), with which filling is to be carried out, from a first vessel (12) into a second vessel (14) by means of a robotic arm (16), wherein the second vessel (14) is positioned on a balance (24), wherein movement (18) of the robotic arm (16) is controlled by at least one movement parameter (BP), comprising the following method steps:
a) positioning the first vessel (12) on the robotic arm (16) such that a mass flow rate of the medium (10) from the first vessel (12) is changeable by a rotating movement (18) of the robotic arm (16) around an axis of rotation (20),
b) positioning the second vessel (14) such that medium (10) poured out of the first vessel (12) gets into the second vessel (14) essentially by the effect of gravity,
c) defining the mass of the medium (10) that is to be filled into the second vessel (14) as the target filling mass (SFM),
d) determining the mass of the medium (10) that has been filled into the second vessel (14) as the actual filling mass (IFM), and also the change in the actual filling mass (IFM) of the medium (10) in the second vessel (14) over time as the actual mass flow rate (IMS), by means of the balance (24),
e) calculating a manipulated mass flow rate (StMS) as the manipulated variable (26) of a first control loop (28), taking into account the actual filling mass (IFM) and the target filling mass (SFM),
f) using the manipulated variable (26) of the first control loop (28) as the reference variable (30) of a second control loop (32) to the effect that the calculated manipulated mass flow rate (StMS) is used as the target mass flow rate (SMS),
g) calculating the at least one movement parameter (BP) of the robotic arm (16) as the manipulated variable (40) of the second control loop (32), taking into account the target mass flow rate (SMS) and the actual mass flow rate (IMS), wherein the at least one movement parameter characterizes the rotating movement around an axis, and
h) executing the movement (18) of the robotic arm (16) on the basis of the at least one movement parameter (BP).

2. Method according to Claim 1, **characterized in that** the axis of rotation (20) is substantially perpendicular to the effect of gravity.

3. Method according to either of the preceding claims, **characterized in that** the at least one movement parameter (PB) of the movement (18) of the robotic arm (16) comprises an angle of rotation, a duration of a constant angle of rotation and/or an angular speed of the angle of rotation of the robotic arm (16).

4. Method according to any of the preceding claims, **characterized in that** the first and/or the second control loop (28, 32) comprises a P controller.

5. Method according to any of the preceding claims, **characterized in that** the first and the second control loop (28, 32) form a cascade control together.

6. Method according to any of the preceding claims, **characterized in that** in step b) of the method the second vessel (14) is positioned such that the medium (10) poured out of the first vessel (12) completely gets into the second vessel (14).

7. Method according to any of the preceding claims, **characterized in that** steps d) to h) of the method are performed continuously during the transfer of the pourable medium (10).

8. Method according to any of the preceding claims, **characterized in that** the method additionally comprises the step of determining an empty mass of the second vessel (14) .

9. Method according to any of the preceding claims, **characterized in that** the method additionally comprises one or more of the following steps,
- determining the mass of the first vessel (12),
- determining the geometry of the first vessel (12),
- determining the nature of the medium (10) and/or
- determining the viscosity of the medium (10)
and the first and/or second control loop (28, 32) and/or the at least one movement parameter (BP) is adjusted taking into account one or more of these values.

10. Device (42) configured for performing the method according to any of Claims 1 to 9, wherein the device comprises a robotic arm (16) for gripping a first vessel (12) and a balance (24) for measuring a mass flow rate of a medium (10) into a second vessel (14), the robotic arm (16) is designed to move a vessel (12) positioned on the robotic arm (16) and containing a pourable medium (10) by a rotating movement (18) of the robotic arm (16) around an axis of rotation (20) such that a mass flow rate of the medium (10) from the vessel (12) is changeable and the movement (18) of the robotic arm (16) is controllable by at least one movement parameter (BP) with the aid of the measurement made by the balance (24), wherein the device comprises two control loops (28, 32) which form a cascade control and which are designed to control the at least one movement parameter (BP).

## Revendications

1. Procédé de transfert d'une masse à verser d'un milieu coulable ou versable (10) d'un premier récipient (12) dans un deuxième récipient (14) au moyen d'un bras de robot (16), le deuxième récipient (14) étant positionné sur une balance (24),
un mouvement (18) du bras de robot (16) étant commandé par au moins un paramètre de mouvement (BP),
ledit procédé comprenant les étapes suivantes :
a) positionner le premier récipient (12) situé sur le bras de robot (16) de manière à pouvoir modifier le débit massique du milieu (10) provenant du premier récipient (12) par un mouvement de rotation (18) du bras de robot (16) sur un axe de rotation (20),
b) positionner le deuxième récipient (14) de manière à ce que le milieu (10) coulé ou versé depuis le premier récipient (12) parvienne dans le deuxième récipient (14) sensiblement par gravité,
c) définir la masse du milieu (10) à verser dans le deuxième récipient (14) comme masse de remplissage cible (SFM),
d) déterminer la masse du milieu (10) transféré dans le deuxième récipient (14) comme masse de remplissage réelle (IFM), et la variation dans le temps de la masse de remplissage réelle (IFM) du milieu (10) entrant dans le deuxième récipient (14) comme débit massique réel (IMS) au moyen de la balance (24),
e) calculer un débit massique de réglage (StMS) comme grandeur de réglage (26) d'un premier circuit de régulation (28) avec prise en compte de la masse de remplissage réelle (IFM) et de la masse de remplissage cible (SFM),
f) utiliser la grandeur de réglage (26) du premier circuit de régulation (28) comme grandeur de guidage (30) d'un deuxième circuit de régulation (32) en ce que le débit massique de réglage calculé (StMS) est utilisé comme débit massique cible (SMS),
g) calculer l'au moins un paramètre de mouvement (BP) du bras de robot (16) comme grandeur de réglage (40) du deuxième circuit de commande (32) avec prise en compte du débit massique cible (SMS) et du débit massique réel (IMS), l'au moins un paramètre de mouvement caractérisant le mouvement de rotation sur un axe et
h) exécuter le mouvement (18) du bras de robot (16) sur la base de l'au moins un paramètre de mouvement (BP) .

2. Procédé selon la revendication 1, **caractérisé en ce que** l'axe de rotation (20) est sensiblement perpendiculaire à la gravité.

3. Procédé selon l'une des revendications précédentes, **caractérisé en ce que** l'au moins un paramètre (PB) du mouvement (18) du bras de robot (16) comprend un angle de rotation, une durée d'un angle de rotation constant et/ou une vitesse angulaire de l'angle de rotation du bras de robot (16).

4. Procédé selon l'une des revendications précédentes, **caractérisé en ce que** la première et/ou la deuxième boucle de régulation (28, 32) comprend un régulateur proportionnel.

5. Procédé selon l'une des revendications précédentes, **caractérisé en ce que** les premier et deuxième circuit de commande (28, 32) forment ensemble une régulation en cascade.

6. Procédé selon l'une des revendications précédentes, **caractérisé en ce que**, à l'étape b) du procédé, le deuxième récipient (14) est positionné de manière à ce que le milieu (10) coulé ou versé depuis le premier récipient (12) parvienne complètement dans le deuxième récipient (14).

7. Procédé selon l'une des revendications précédentes, **caractérisé en ce que** les étapes d) à h) du procédé sont réalisées en continu pendant le transfert du milieu coulable ou versable (10).

8. Procédé selon l'une des revendications précédentes, **caractérisé en ce que** le procédé comprend en outre l'étape de détermination d'une masse à vide du deuxième récipient (14).

9. Procédé selon l'une des revendications précédentes, **caractérisé en ce que** le procédé comprend en outre une ou plusieurs des étapes suivantes,
- déterminer la masse du premier récipient (12),
- déterminer la géométrie du premier récipient (12),
- déterminer le type du milieu (10) et/ou
- déterminer la viscosité du milieu (10)
et le premier et/ou le deuxième circuit de régulation (28, 32) et/ou l'au moins un paramètre de mouvement (BP) sont adaptés avec prise en compte d'une ou plusieurs de ces valeurs.

10. Dispositif (42) conçu pour mettre en œuvre le procédé selon l'une des revendications 1 à 9,
le dispositif comprenant un bras de robot (16) destiné à saisir un premier récipient (12) et une balance (24) destinée à mesurer un débit massique d'un milieu (10) jusque dans un deuxième récipient (14), le bras de robot (16) étant conçu pour déplacer un récipient (12), positionné sur un bras de robot (16) et contenant un milieu coulable ou versable (10), par un mouvement de rotation (18) du bras de robot (16) sur un axe de rotation (20) de manière à pouvoir modifier un débit massique du milieu (10) provenant du récipient (12) et à pouvoir commander le mouvement (18) du bras de robot (16) par au moins un paramètre de mouvement (BP) à l'aide de la mesure faite par la balance (24), le dispositif comprenant deux boucles de régulation (28, 32) qui forment une régulation en cascade et qui sont conçues pour réguler au moins un paramètre de mouvement (BP) .
